Europäisches Patentamt

European Patent Office

Office européen des brevets

(11) Veröffentlichungsnummer : **0 086 817**
**B1**

## (12) EUROPÄISCHE PATENTSCHRIFT

(45) Veröffentlichungstag der Patentschrift :
05.03.86

(21) Anmeldenummer : 82902721.8

(22) Anmeldetag : 30.08.82

(86) Internationale Anmeldenummer :
PCT/EP 82/00186

(87) Internationale Veröffentlichungsnummer :
WO/8300846 (17.03.83 Gazette 83/07)

(51) Int. Cl.⁴ : **B 60 J   3/02**

(54) SONNENBLENDE FÜR KRAFTFAHRZEUGE OD. DGL.

(30) Priorität : 31.08.81 DE 3134400

(43) Veröffentlichungstag der Anmeldung :
31.08.83 Patentblatt 83/35

(45) Bekanntmachung des Hinweises auf die Patenterteilung : 05.03.86 Patentblatt 86/10

(84) Benannte Vertragsstaaten :
DE FR NL

(56) Entgegenhaltungen :
EP-A- 0 068 269
FR-A- 1 513 851
FR-A- 2 186 368
FR-E-    85 469

(73) Patentinhaber : AUTOPART SWEDEN GMBH DEUTS-
CHLAND
Giselastrasse 4
D-8000 München (DE)

(72) Erfinder : GERCKEN, Karl
Eichleite 16
D-8022 Grünwald (DE)

(74) Vertreter : Patentanwälte Dr. Solf & Zapf
Asamstrasse 8
D-8000 München 90 (DE)

**Beschreibung**

Die Erfindung betrifft eine Sonnenblende gemäß dem Oberbegriff des Anspruches 1.

Sonnenblenden dieser Gattung sind bekannt. Bei ihnen besteht generell das herstellungstechnische Problem, die Befestigung des Lagerzapfens im Polsterkörper so zu bewirken, daß dessen Ummantelung mit der folienartigen Hülle von dem Lagerzapfen nicht behindert wird. Die Umhüllung erfolgt in der Weise, daß der Polsterkörper beidseitig jeweils mit einer Folie belegt und die beiden Folien dann entlang des Randes des Sonnenblendenkörpers, dessen Kontur folgend, in einem Arbeitsgang miteinander verschweißt werden.

Das vorgenannte Problem wird im Stande der Technik auf zweierlei Weise gelöst. Die eine sieht vor, den Lagerzapfen mit in die folienartige Hülle einzubeziehen, d. h. auch den Zapfen mit der Folie zu umkleiden. Im Gebrauch der Sonnenblende führt dies dazu, daß die Hülle im eingerasteten Zustand der Sonnenblende zwischen den Gegenlagerkörper und den Lagerzapfen zu liegen kommt und beim Verschwenken der Sonnenblende dort leicht verzogen und eingerissen werden kann.

Der andere bekannte Weg, das Problem zu lösen, besteht darin, den Lagerzapfen erst nach der Fertigstellung der folienartigen Hülle in dem Lagerkörper zu befestigen, wofür er durch randseitige Öffnungen in der Folie nachträglich in den Polsterkörper, und zwar in einen in diesen eingearbeiteten, seiner Form nach die Umhüllung nicht störenden Haltekörper, eingefügt und dabei mit dem Haltekörper verbunden wird. Die Öffnungen in der folienartigen Hülle werden auf einfache Weise mit Hilfe einer Unterbrechung der die beidseitigen Folien verbindenden Schweißnaht gebildet. Nach dem Einsetzen überquert der Lagerzapfen freiliegend die randseitige Ausnehmung in der Sonnenblende.

Bei den bekannten Ausführungen von Sonnenblenden mit freiliegendem Lagerzapfen läßt die Befestigung desselben im Haltekörper zu wünschen übrig.

Die Erfindung befasst sich mit Sonnenblenden der letztgenannten Art mit freiliegendem Lagerzapfen, und die ihr zugrundeliegende Aufgabe besteht darin, eine Verbindung zwischen dem Haltekörper und dem Lagerzapfen zu erzielen, bei der der Lagerzapfen die zwischen ihm und dem Gegenlagerkörper bei der Handhabung der Sonnenblende in der Hauptsache radial zu seiner Erstreckung übertragenen Kräfte ebenfalls radial in den Haltekörper einleitet, so daß die seinen Halt in Achsrichtung bewirkenden, verhältnismäßig empfindlichen Elemente hiervon entlastet sind, und daß er überdies im Haltekörper außer in der nötigen Achsrichtung auch gegen Drehen gesichert ist, so daß zwischen ihm und dem Haltekörper kein seine Lockerung in diesem bewirkender Verschleiß eintreten kann.

Die vorstehende Aufgabe wird gemäß der Erfindung durch die im Kennzeichnungsteil des Anspruchs 1 angegebenen Merkmale gelöst.

Bei der Sonnenblende gemäß der Erfindung wird der Haltekörper durch den etwa U-förmigen Haltebügel gebildet und nimmt den von Ende zu Ende geraden Lagerzapfen in der dem Gebrauchszweck der Sonnenblende sehr förderlichen Weise so auf, daß Übertragung der hauptsächlichen Kräfte von dem letzteren auf den Haltebügel, in den Stecklöchern radial zur Lagerzapfenachse und zur Stecklochachse stattfindet und die beiden Sicherungsfunktionen, nämlich die Fixierung in Achsrichtung einerseits und gegen Drehen andererseits, zuverlässig ohne Gefahr einer Minderung durch Abrieb, insbesondere auch unter den dauernden Erschütterungen während der Fahrt des Fahrzeuges, erfüllt sind und auf Dauer bestehen bleiben.

Abgesehen von der Förderung des Gebrauchszwecks, den die Sonnenblende erfährt, ergeben sich auch für deren Herstellung durch die Erfindung Vorteile, weil der Lagerzapfen durch die Aufteilung der beiden vorgenannten Sicherungsfunktionen auf besonders einfache Weise nach dem Bilden der folienartigen Hülle in den Haltebügel eingesetzt werden kann, da das eine Steckloch seine axiale Verschiebbarkeit unbehindert läßt und erst, nachdem der Zapfen in dieses eingeführt worden ist, durch nunmehriges Zurückschieben des Zapfens in das andere Steckloch die axiale Sicherung, vorzugsweise unter Ausnutzung eines Schnapp-Effektes, zustandekommt.

Die Unteransprüche haben vorteilhafte Weiterbildungen des Gegenstandes des Anspruchs 1 zum Inhalt.

Die Erfindung wird nachstehend anhand eines Ausführungsbeispiels in Verbindung mit der Zeichnung näher erläutert. Es zeigen :

Figur 1 die Sonnenblende in Ansicht von vorn, wobei der im Innern der Sonnenblende befindliche Haltebügel mit den Stecklöchern und den in diese eingesetzten Enden des Lagerzapfens gestrichelt dargestellt ist,

Figur 2a die Sonnenblende und ein ihrer Befestigung an einer fahrzeuggebundenen Schwenkachse dienendes Klemmlager im Schnitt entlang der Schnittlinie IIa-IIa in Fig. 1, und zwar mit ausgezogenen Linien im zur Scheibe des Kraftfahrzeugs heruntergeklappten Zustand und strichpunktiert in einer zur Fahrzeugdecke hochgeklappten Rastposition,

Figur 2b den Querschnitt entlang der Schnittlinie IIb-IIb in Fig. 1 durch die Sonnenblende und das am rechten Ende von deren Längsrand angeordnete Gegenlager,

Figur 3 den Haltebügel für sich allein in Ansicht von vorn,

Figur 4 den Haltebügel von der Seite, bezüglich Fig. 3 von links gesehen,

Figur 5 den durch die Mitte des Steckloches geführten Querschnitt durch den linken Stecklochteil des Haltebügels gemäß Fig. 3, wobei die Schnittebene zur Zeichenebene der Fig. 3 parallel liegt,

Figur 6 den der Fig. 5 entsprechenden Querschnitt durch den rechten Stecklochteil des Haltebügels nach Fig. 3,

Figur 7 den oberen Teil der Seitenansicht gemäß Fig. 4 in vergrößertem Maßstab,

Figur 8 den Querschnitt durch den linken Stecklochteil des Haltebügels nach Fig. 3 entlang der Schnittlinie VIII-VIII aus Fig. 5,

Figur 9 den rechten Stecklochteil des Haltebügels nach Fig. 3 in Seitenansicht mit Blickrichtung von rechts bezüglich Fig. 3 und Fig. 6,

Figur 10 den Lagerzapfen für sich in Draufsicht,

Figur 11 die Stirnansicht zu Fig. 10 mit Blickrichtung von rechts bezüglich Fig. 10, und

Figur 12 die Stirnansicht zu Fig. 10 mit Blickrichtung von links bezüglich Fig. 10.

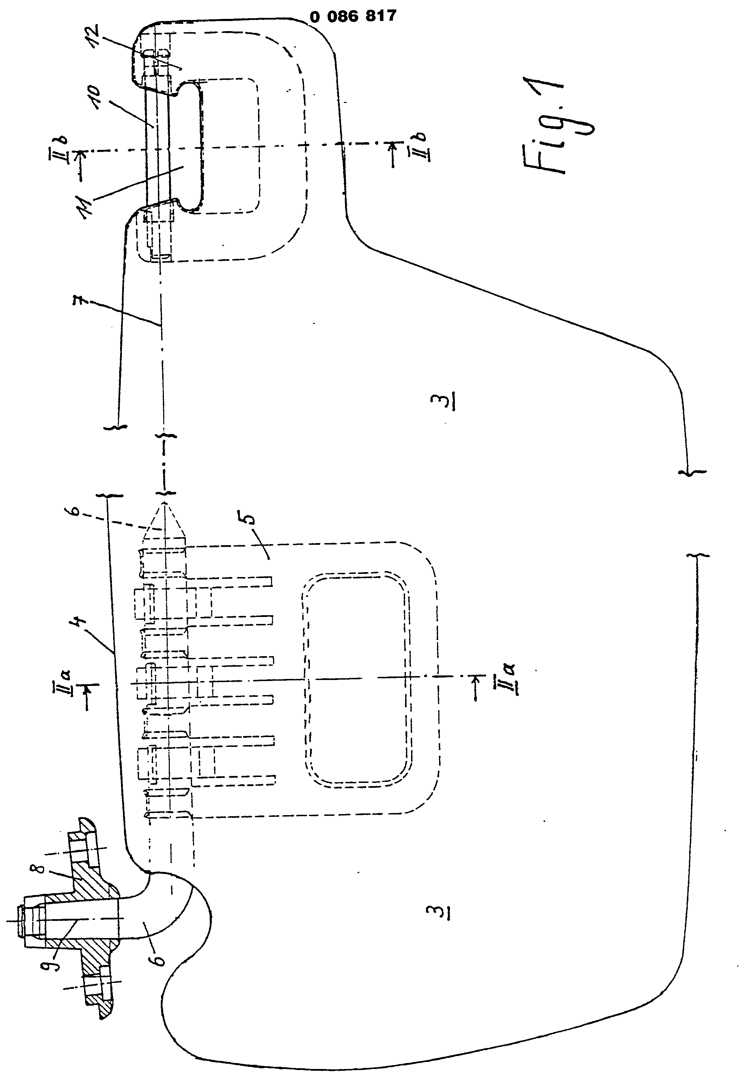

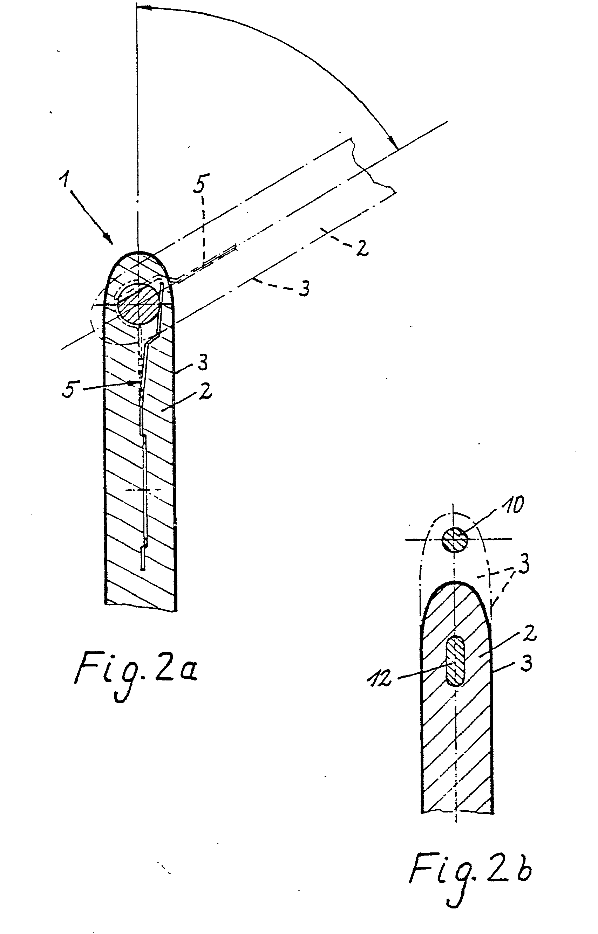

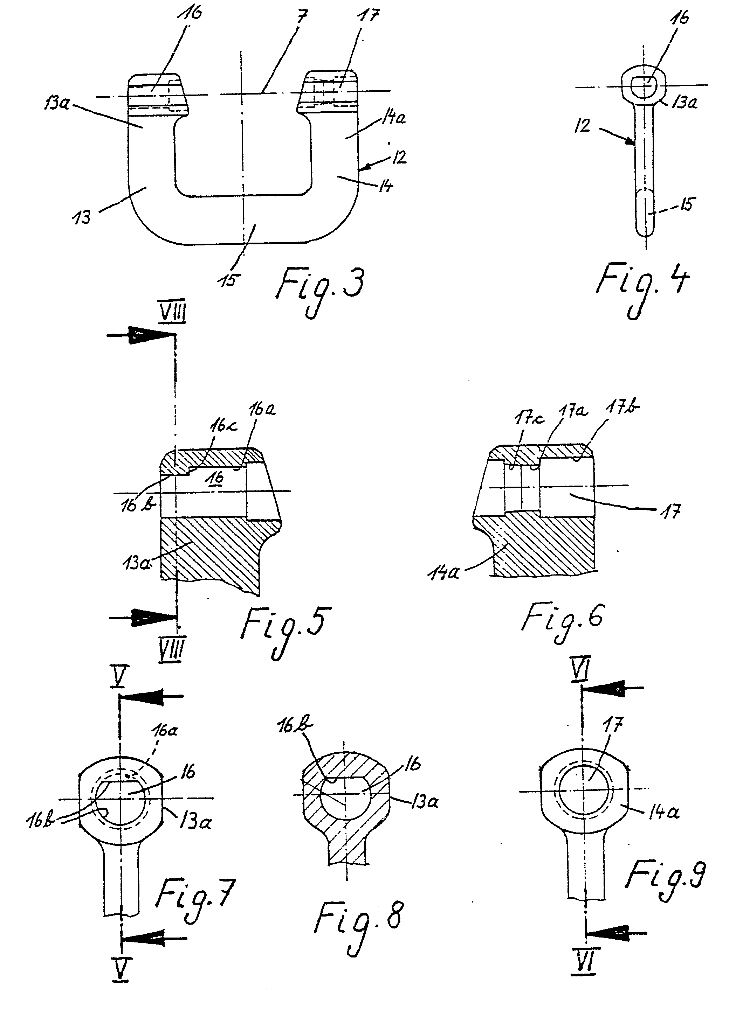

Die in den Fig. 1-2b dargestellte Sonnenblende 1 ist in üblicher Weise als Polsterkörper ausgebildet. Das Polstermaterial 2 ist bei ihr von einer folienartigen Hülle 3 umschlossen, wobei die Schweißnaht entlang des Sonnenblendenrandes verläuft.

Nahe dem in Fig. 1 linken Ende des Sonnenblendenlängsrandes 4 ist innerhalb der Hülle 3 ein Klemmlager 5 angeordnet, das in dem Polstermaterial 2 verankert ist. Das Klemmlager 5 sitzt klemmend auf einer fahrzeuggebundenen Lagerachse 6, um deren Mittelachse 7 die Sonnenblende 1 gegen den vom Klemmlager 5 vermittelten Widerstand verschwenkbar ist. Die Lagerachse 6 ist etwa rechtwinklig abgebogen und mit dem abgebogenen Ende in einem am Fahrzeug befestigten Lagerböckchen 8 um die Mittelachse 9 ihres abgewinkelten Abschnittes schwenkbar gelagert.

Am anderen, für den Betrachter der Fig. 1 rechten Ende, befindet sich in der Flucht der Mittellinie 7 der Lagerachse 6 ein Gegenlagerzapfen 10, der/eine randseitige Ausnehmung 11 in der Sonnenblende überbrückt und, wie die Lagerachse 6, zum Sonnenblendenlängsrand etwa parallel verläuft. Der Lagerzapfen 10 ist in einem U-förmigen Haltebügel 12 fixiert, der ebenfalls innerhalb der Hülle 3 im Polstermaterial 2 der Sonnenblende 1 befestigt ist.

Der Lagerzapfen 10 ist etwa senkrecht zu seiner Erstreckung in einen in der Zeichnung nicht dargestellten fahrzeuggebundenen Gegenlagerkörper elastisch sowie lösbar einrastbar und bestimmt im eingerasteten Zustand zusammen mit dem aus dem Klemmlager 5 und der Lagerachse 6 bestehenden Gelenk eine fahrzeugfeste Drehachse für die Sonnenblende.

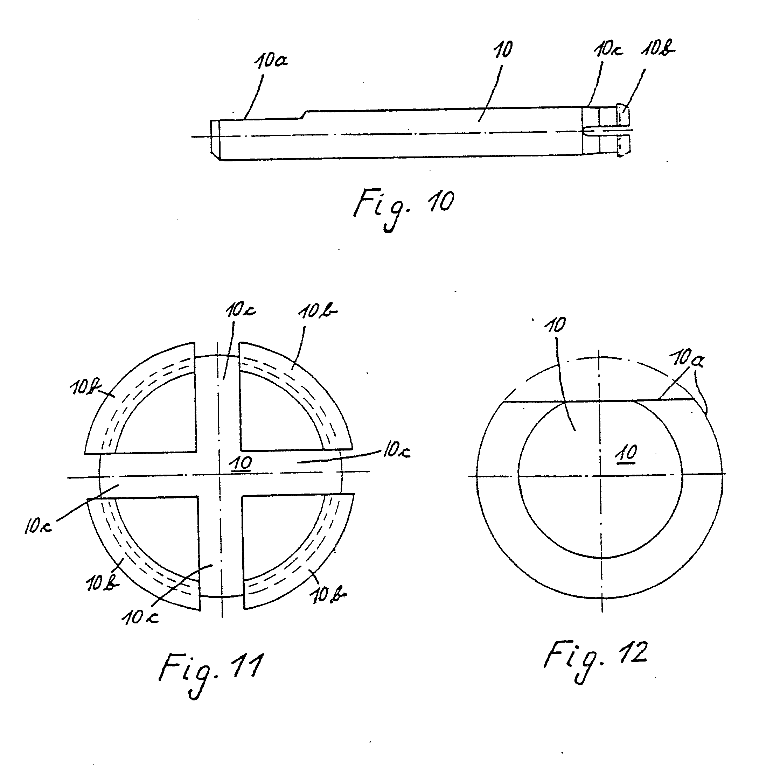

Das aus dem Haltebügel 12 und dem Lagerzapfen 10 bestehende Gegenlager ist in näheren Einzelheiten in den Fig. 3 bis 12 dargestellt. Den Haltebügel zeigen im Detail die Fig. 3 bis 9. Der Lagerzapfen ist im einzelnen in den Fig. 10 bis 12 wiedergegeben.

Gemäß Fig. 3 bis 9 weist der vollständig in das Polstermaterial innerhalb der folienartigen Umhüllung 3 eingebettete und darin festgelegte Haltebügel 12 eine U-förmige Gestalt auf, mit seitlichen Schenkeln 13 und 14 und einem diese verbindenden Quersteg 15. Nahe bei den freien Enden der Schenkel 13 und 14 befinden sich Stecklöcher 16 bzw. 17.

Der Stecklochteil 13a des in Fig. 3 linken Haltebügelschenkels 13 ist in den Fig. 5 und 8 im Querschnitt dargestellt. Dieser Darstellung ist zu entnehmen, daß das Steckloch 16 von der Bügelmitte her gesehen zunächst einen Abschnitt 16a mit kreisrundem Querschnitt aufweist, dem sich ein unrunder Abschnitt 16b bügelauswärts anschließt. Der unrunde Querschnitt hat die Form eines über einen Teil seines Umfanges angeflachten Kreises. Am Übergang zwischen dem kreisrunden Abschnitt 16a und dem unrunden Abschnitt 16b befindet sich eine bezüglich der Achse 7 radiale Stufe 16c.

Der Stecklochteil 14a des rechten Bügelschenkels 14 ist in Fig. 6 im Querschnitt wiedergegeben. Die Darstellung zeigt, daß das Steckloch 17 durchgehend einen kreisförmigen Querschnitt hat, wobei jedoch zur Bügelmitte hin ein Abschnitt 17a von vermindertem Querschnitt vorgesehen ist, dem bügelauswärts ein Abschnitt 17b von erweitertem Querschnitt folgt.

Der Lagerzapfen 10 ist gemäß Fig. 10 an seinem linken Ende mit einem zu dem Querschnitt des Stecklochabschnittes 16b mit Gleitspiel passenden Querschnitt 10a versehen, und an seinem rechten Ende mit einem auswärts kegelig verjüngten Kopf 10b ausgestattet, dessen zapfeneinwärts gelegener größter Durchmesser größer als derjenige des Stecklochabschnittes 17a aber nicht größer als derjenige des Stecklochabschnittes 17b ist. Senkrecht überkreuz gestellte Schlitze 10c verleihen dem Kopf 10b ein Federungsvermögen radial zur Zapfenlängsachse.

Im eingebauten Zustand des Haltebügels 12 fluchten mit den Stecklöchern 16 und 17 im Schweißnahtbereich gelegene, jeweils durch eine Unterbrechung in der Schweißnaht gebildete Öffnungen in der folienartigen Hülle, durch die hindurch der Lagerzapfen 10 in die Stecklöcher 16 und 17 einsetzbar ist. Dies geschieht in der Weise, daß zunächst das für den Betrachter der Fig. 10 linke Ende des Lagerzapfens mit seinem unrunden Querschnitt in das Steckloch 16 bis hinein in den Abschnitt 16c von dazu passendem Querschnitt so weit eingeschoben wird, bis der Kopf 10b am anderen Ende in die Flucht des Steckloches 17 gebracht werden kann. Dann wird der Lagerzapfen 10 auch in das rechte Steckloch 17 eingeführt, und zwar so weit, bis er hinter dem verengten Stecklochabschnitt 17b nach aussen federn und so eine Schnappverbindung herstellen kann.

Bügeleinwärts ist dem Stecklochabschnitt 17a ein kegelig etwas erweiterter Abschnitt 17c vorangestellt. Dieser ergibt zusammen mit einem dazu passenden, zapfenauswärts verjüngten Abschnitt 10c des Lagerzapfens 10 eine in Achsrichtung wirksame Verschiebesicherung bügelauswärts weitgehend genau in derjenigen relativen Position zwischen Bügel und Zapfen, in der der Zapfenkopf 10b gerade hinter die Stecklochverengung 17a eingerastet ist. Auf diese Weise ist der Zapfen 10 nach dem vorstehend geschilderten Einführen in das Steckloch 17 beidseitig in Achsrichtung gesichert, und zusätzlich dazu durch die Passform der auch dann noch zusammenwirkenden Querschnitte des Zapfenendes 10a und des Stecklochabschnittes 16c auch gegen Drehung.

Die Länge des unrunden Zapfenendes 10a ist so gewählt, daß einerseits der Zapfenkopf 10b in die Flucht mit dem Steckloch 17 gebracht werden kann, andererseits aber in der Rastposition des Zapfens 10 der unrunde Querschnitt noch gut innerhalb des Steckloches 16 bleibt. Demzufolge hat der die Randausnehmung 11 in der Sonnenblende überbrückende Zapfenteil durchgehend kreisrunden Querschnitt.

**Patentansprüche**

1. Als Polsterkörper ausgebildete Sonnenblende (1) für Kraftfahrzeuge oder dgl., bei der das Polstermaterial (2) von einer folienartigen Hülle (3) umschlossen ist und die an einem ihrer Längsränder (4) nahe bei dem einen Ende um zwei zueinander senkrechte Achsen (7, 9) verschwenkbar dauernd mit dem Fahrzeug verbunden ist und im größeren Abstand hiervon zum anderen Ende hin einen eine randseitige Ausnehmung (11) in der Sonnenblende (1) überquerenden, zum Rand etwa parallelen Lagerzapfen (10) aufweist, der etwa senkrecht zu seiner Erstreckung in einen fahrzeuggebundenen Gegenlagerkörper elastisch sowie lösbar einrastbar ist und im eingerasteten Zustand mit dem beim anderen Ende befindlichen Gelenk eine fahrzeugfeste Drehachse (7) bestimmt, um die die Sonnenblende verschwenkbar ist, dadurch gekennzeichnet, daß der von Ende zu Ende gerade Lagerzapfen (10) mit seinen Endbereichen (10a, 10b) durch Stecköffnungen in der Hülle (3) hindurch jeweils in ein Steckloch (16 bzw. 17) in dem einen bzw. anderen Schenkel (13 bzw. 14) eines innerhalb der Hülle (3) im Sonnenblendenkörper (2) befestigten, etwa U-förmigen Haltebügels (12) eingesteckt und in mindestens einem Steckloch (16, 17) gegen Drehen und gegen axiales Verschieben bezüglich des Haltebügels (12) gesichert ist.

2. Sonnenblende nach Anspruch 1, dadurch gekennzeichnet, daß der Lagerzapfen in dem einen Steckloch (16) gegen Drehen und in dem anderen Steckloch (17) gegen axiales Verschieben bezüglich des Haltebügels (12) gesichert ist.

3. Sonnenblende nach Anspruch 1 und 2, dadurch gekennzeichnet, daß die Drehsicherung zwischen dem einen Lagerzapfenendbereich (10a) und dem zugehörigen Steckloch (16) aus deren relative axiale Verschiebbarkeit zulassenden, zueinander paßgerechten unrunden Querschnitten dieser Elemente besteht.

4. Sonnenblende nach Anspruch 2, dadurch gekennzeichnet, daß zur Sicherung des anderen Lagerzapfenendbereichs gegen axiales Verschieben in dem zugehörigen Steckloch (17) mindestens ein Paar aus einem Vorsprung (10b) an dem einen (10) von ihnen und einer Verengung (17a) in dem anderen (17) von ihnen vorgesehen ist, die beim Einschieben des Lagerzapfenendbereichs in das Steckloch (17) schnappend einrasten und mit in beiden Achsrichtungen sperrend wirkenden Flächen versehen sind.

5. Sonnenblende nach Anspruch 4, dadurch gekennzeichnet, daß der Vorsprung (10b) aus einem Kopf am Lagerzapfenendbereich und die Verengung (17a) aus einer Umfangsrippe an der Stecklochwandung besteht, die beide axial wirkende Sperrflächen aufweisen, und daß der Lagerzapfenendbereich radial federnd ausgeführt ist.

**Claims**

1. Sun visor (1) designed as padded element for motor vehicles or the like, in which the padding material (2) is enclosed by a film-like housing (3) and which is pivotably permanently fixed to the vehicle at one of its longitudinal edges (4) near to one end about two mutually perpendicular axes (7, 9) and, at a greater distance from here towards the other end, has a bearing pin (10) approximately parallel to the edge and crossing a recess (11), on the edge side, in the sun visor (1), which bearing pin is flexibly and detachably engageable approximately perpendicular to its extent in a counter-bearing element fixed to the vehicle and, in the engaged state, determines, with the joint located at the other end, an axis of rotation (7) fixed to the vehicle, about which the sun visor can be pivoted, characterised in that the bearing pin (10), which is straight from end to end, is inserted by its end regions (10a, 10b) through insert openings in the housing (3) in each case into an insert hole (16 and 17, respectively) in one or the other arm (13 and 14, respectively) of an approximately U-shaped bracket (12) secured within the housing (3) in the sun visor element (2) and is retained against rotation in at least one insert hole (16, 17) and against axial displacement with respect to the bracket (12).

2. Sun visor according to Claim 1, characterised in that the bearing pin is retained against rotation in one insert hole (16) and against axial displacement with respect to the bracket (12) in the other insert hole (17).

3. Sun visor according to Claim 1 and 2, characterised in that the rotational retention between one bearing pin end region (10a) and the associated insert hole (16) consists of non-circular cross-sections of these elements fitting each other and permitting their relative axial displaceability.

4. Sun visor according to Claim 2, characterised in that, for retention of the other bearing pin end region against axial displacement in the

**0 086 817**

associated insert hole (17), at least one pair comprising a projection (10b) on one (10) of them and a constriction (17a) in the other (17) of them is provided which engage in snap action when the bearing pin end region is inserted into the insert hole (17) and are provided with areas having a blocking effect in both axial directions.

5. Sun visor according to Claim 4, characterised in that the projection (10b) consists of a head at the bearing pin end region and the constriction (17a) of a circumferential rib on the insert hole wall, which both have axially acting blocking areas, and in that the bearing pin end region is designed to be radially resilient.

**Revendications**

1. Pare-soleil (1) pour véhicules automobiles ou autres représenté par un corps matelassé, dans lequel le matériau de rembourrage (2) est enveloppé par une feuille de gainage (3), ce pare-soleil étant relié en permanence au véhicule à proximité de l'une de ses extrémités et sur l'un de ses rebords longitudinaux (4), avec une possibilité de rotation autour de deux axes (7, 9) perpendiculaires entre eux, un tourillon (10), pratiquement parallèle au rebord précité et surmontant un évidement latéral (11) du pare-soleil (1), étant prévu sur la seconde extrémité, relativement distante de la première, ce tourillon (10) présentant une possibilité d'enclenchement élastique et amovible, par un mouvement à peu près perpendiculaire à son sens longitudinal, dans un corps d'appui solidaire du véhicule, et constituant après son encliquetage, avec l'articulation prévue sur la première extrémité, un axe de rotation (7), solidaire du véhicule, autour duquel le pare-soleil peut pivoter, caractérisé en ce que les parties extrêmes (10a, 10b) du tourillon (10) entièrement rectiligne sont respectivement enfoncées, par des ouvertures pratiquées dans la gaine (3), dans un trou de fixation (16 et/ou 17) prévu dans chaque branche (13 et/ou 14) d'un étrier (12) à peu près en U, fixé dans le corps (2) du pare-soleil à l'intérieur de la gaine (3), le tourillon (10) étant par ailleurs protégé dans un trou de fixation au moins (16, 17) contre tout risque de rotation et de déplacement axial par rapport à l'étrier de fixation (12).

2. Pare-soleil suivant la revendication 1, caractérisé en ce que le tourillon est respectivement protégé contre tout risque de rotation et de déplacement axial par rapport à l'étrier (12) dans les trous de fixation (16) et (17).

3. Pare-soleil suivant une des revendications 1 et 2, caractérisé en ce que la rotation entre la première partie extrême (10a) du tourillon et le trou de fixation (16) correspondant est interdite par les sections ovalisées de ces éléments, adaptées l'une à l'autre et autorisant un déplacement axial relatif.

4. Pare-soleil selon la revendication 2, caractérisé en ce que la seconde partie extrême du tourillon est protégée contre tout risque de déplacement axial dans le trou de fixation correspondant (17) par une combinaison au moins d'une saillie (10b) prévue sur l'un de ces éléments (10) et d'un rétrécissement (17a) présenté par l'autre élément (17), les deux parties précitées s'enclenchant lorsque la section extrême du tourillon est enfoncée dans le trou (17) et présentant des surfaces de blocage dans les deux sens axiaux.

5. Pare-soleil selon la revendication 4, caractérisé en ce que la saillie (10b) se compose d'une tête prévue sur la partie extrême du tourillon et le rétrécissement (17a) d'une nervure périphérique sur la paroi du trou de fixation, les deux parties précitées étant munies de surfaces de blocage axial, et en ce que la section extrême du tourillon est dotée d'une élasticité radiale.

Fig. 1

0 086 817

Fig. 2a

Fig. 2b

Fig. 3

Fig. 4

Fig. 5

Fig. 6

Fig. 7

Fig. 8

Fig. 9

3

Fig. 10

Fig. 11

Fig. 12